# EUROPEAN PATENT SPECIFICATION

(11) **EP 4 507 437 B1**
(45) Date of publication and mention of the grant of the patent: **22.04.2026**
(21) Application number: 23799088.2
(22) Date of filing: 20.01.2023
(51) Int. Cl.: H04W 74/0833, H04W 74/08, H04W 74/00, H04W 72/12, H04L 5/00

(54) **RANDOM ACCESS METHOD AND APPARATUS, STORAGE MEDIUM, AND ELECTRONIC APPARATUS**
DIREKTZUGRIFFSVERFAHREN UND -VORRICHTUNG, SPEICHERMEDIUM UND ELEKTRONISCHE VORRICHTUNG
PROCÉDÉ ET APPAREIL D'ACCÈS ALÉATOIRE, SUPPORT DE STOCKAGE ET APPAREIL ÉLECTRONIQUE

(30) Priority: 05.05.2022 CN 202210482570
(43) Date of publication of application: 12.02.2025
(73) Proprietor: ZTE Corporation, Shenzhen, Guangdong 518057 (CN)
(72) Inventor: WANG, Mengqiang, Shenzhen, Guangdong 518057 (CN); GAO, Minggang, Shenzhen, Guangdong 518057 (CN); ZHAO, Lei, Shenzhen, Guangdong 518057 (CN)
(74) Representative: Osterhoff, Utz
(86) International application number: PCT/CN2023/073429
(87) International publication number: WO 2023/213098

(56) References cited:
- CN-A- 106 470 381
- CN-A- 111 867 133
- CN-A- 111 869 305
- CN-A- 113 924 815
- US-A1- 2018 077 736
- US-A1- 2020 389 924
- US-A1- 2021 051 727
- US-A1- 2021 051 729
- US-A1- 2022 124 830

## Description

The present disclosure relates to the technical field of communication, and in particular, to a random access method for a terminal device, a random access method for a network device, a random access apparatus for a terminal device, a random access apparatus for a network device, and a storage medium.

### BACKGROUND

When the terminal device performs random access, after the terminal device sends a random access request (message 1, MSG1) to the network device, the network device needs to send a random access response (message 2, MSG2) to respond to the terminal device's MSG1.

In the related art, in the processing of MSG2, the physical downlink control channel (PDCCH) is used to schedule the physical downlink shared channel (PDSCH) to transmit MSG2, which significantly increases the access delay.

In US 2022/124830A1, mechanisms for contention resolution in a random access procedure are disclosed. A network device is caused to transmit MSG2 to terminal devices on a downlink control channel. The transmitted MSG2 comprises identity information of at least one of the terminal devices to indicate that the random access procedure of the at least one of the one or more terminal devices is successful, and MSG2 indicates the transmission resource of MSG3. The terminal decodes MSG2, obtains the transmission resource for MSG3 and transmits a radio resource control connection request as MSG3 scrambled by an identifier obtained from MSG2.

In US2021/051729A1, wireless communication devices, systems, and methods related to mechanisms to implement improved RAR decoding performance and resource utilization efficiency in a RACH procedure. A PDCCH with common search space encodes a DCI with configuration information that schedules separate PDSCHs for different UEs/UE groups. When sending a RAR message, the PDCCH includes a DCI with a configuration field to signal multiple DMRS resources with corresponding PDSCH. Each sub-field of the configuration field may include one or multiple bits.

When one bit per sub-field, the bit is a flag that when asserted leads the UE to blind decode the PDSCH associated with that DMRS resource. When multiple bits, it includes a flag field as well as one or more bits that include least significant bits of a UE identifier (or group identifier). The UE locates its identifier (or group identifier), and limits decoding to that PDSCH with corresponding DMRS resource.

### SUMMARY

Embodiments of the present disclosure provide a random access method for a terminal device, a random access method for a network device, a random access apparatus for a terminal device, a random access apparatus for a network device, and a storage medium.

According to an aspect of the present disclosure, the present disclosure provides a random access method for a terminal device, including: sending a random access request to a network device; obtaining downlink control information corresponding to the terminal device sent by the network device from a physical downlink control channel according to the random access request, where the downlink control information includes a random access response; decoding the downlink control information, extracting scheduling information of a random access instruction from the random access response; and sending the random access instruction to the network device according to the scheduling information; the random access response includes the scheduling information, and the scheduling information includes a timing advance command, an uplink grant, and a temporary cell-radio network temporary identifier, Temporary C-RNTI; the sending the random access instruction to the network device according to the scheduling information including: scrambling the random access instruction via the Temporary C-RNTI; and sending the scrambled random access instruction to the network device through a resource configuration indicated by the uplink grant at a sending time indicated by the timing advance command.

According to another aspect of the present disclosure, the present disclosure provides a random access method for a network device, including: obtaining a random access request sent by a terminal device; and sending downlink control information corresponding to the terminal device to a physical downlink control channel according to the random access request, wherein the downlink control information includes a random access response, wherein the random access response comprises scheduling information, and the scheduling information comprises a timing advance command, an uplink grant, and a temporary cell-radio network temporary identifier, Temporary C-RNTI; and receiving a random access instruction from the terminal device, wherein the random access instruction is scrambled by the terminal device via the Temporary C-RNTI and sent by the terminal device through a resource configuration indicated by the uplink grant at a sending time indicated by the timing advance command.

According to another aspect of the present disclosure, the present disclosure provides a random access apparatus for a terminal device, including: a first sending module configured to send a random access request to a network device; a first obtaining module configured to obtain downlink control information corresponding to the terminal device sent by the network device from a physical downlink control channel according to the random access request, where the downlink control information includes a random access response; a second obtaining module configured to decode the downlink control information, and extract scheduling information of a random access instruction from the random access response; and a second sending module configured to send the random access instruction to the network device according to the scheduling information. The random access response includes the scheduling information, and the scheduling information includes a timing advance command, an uplink grant, and a temporary cell-radio network temporary identifier, Temporary C-RNTI. The second sending module is further configured to scramble the random access instruction via the Temporary C-RNTI; and send the scrambled random access instruction to the network device through a resource configuration indicated by the uplink grant at a sending time indicated by the timing advance command.

According to another aspect of the present disclosure, the present disclosure provides a random access apparatus for a network device, including: a third obtaining module configured to obtain a random access request sent by a terminal device; and a third sending module configured to send downlink control information corresponding to the terminal device to a physical downlink control channel according to the random access request, where the downlink control information includes a random access response, wherein the random access response comprises scheduling information, and the scheduling information comprises a timing advance command, an uplink grant, and a temporary cell-radio network temporary identifier, Temporary C-RNTI; and
the random access apparatus is configured to receive a random access instruction from the terminal device, wherein the random access instruction is scrambled by the terminal device via the Temporary C-RNTI and sent by the terminal device through a resource configuration indicated by the uplink grant at a sending time indicated by the timing advance command.

According to still another aspect of the present disclosure, the present disclosure provides a storage medium storing a computer program, and the computer program is configured to execute the step of the method as described above when running. According to still another aspect of the present disclosure, the present disclosure provides an electronic device, including: a memory and a processor, the memory stores a computer program, and the processor is configured to run the computer program to execute the step of the method as described above.

The invention is defined in the appended claims.

### BRIEF DESCRIPTION OF THE DRAWINGS

The drawings described herein are to provide further understanding of the present disclosure and constitute a part of the present disclosure. The schematic embodiments of the present disclosure and their descriptions are to explain the present disclosure and do not constitute improper limitations on the present disclosure. In the drawings:
FIG. 1 is a hardware structure block diagram of a mobile terminal in a random access method according to an embodiment of the present disclosure;
FIG. 2 is a flowchart of a random access method applied to a terminal device according to an embodiment of the present disclosure;
FIG. 3 is a schematic diagram of a DCI format 0_3 according to an exemplary embodiment of the present disclosure;
FIG. 4 is a flowchart of a random access method applied to a network device according to an exemplary embodiment of the present disclosure;
FIG. 5 is a flowchart of a random access method applied to a dedicated network according to an exemplary embodiment of the present disclosure;
FIG. 6 is a flowchart of a random access method applied to a hybrid network according to an exemplary embodiment of the present disclosure;
FIG. 7 is a structural block diagram of a random access apparatus configured in a terminal device according to an embodiment of the present disclosure; and
FIG. 8 is a structural block diagram of a random access apparatus configured in a network device according to an embodiment of the present disclosure.

### DETAILED DESCRIPTION OF THE EMBODIMENTS

The present disclosure will be described in detail below with reference to the accompanying drawings and in combination with the embodiments. It should be noted that the embodiments and features in the embodiments of the present disclosure can be combined with each other without conflict.

It should be noted that the terms "first", "second", etc. in the specification and claims of the present disclosure and the above-mentioned drawings are to distinguish similar objects, and are not necessarily to describe a specific order or sequence.

### Embodiment 1

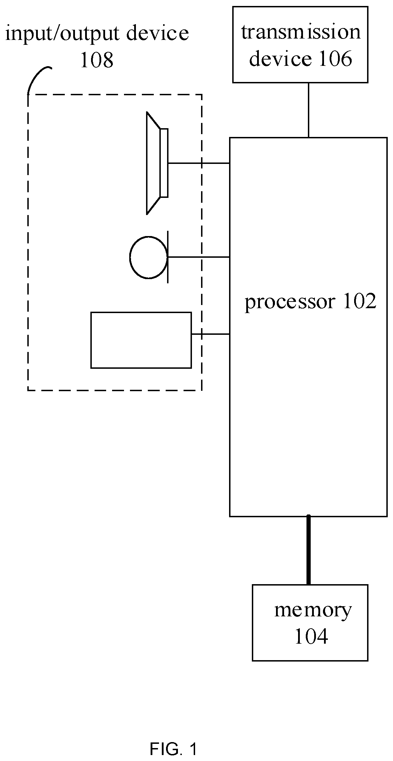

The method embodiment provided in the first embodiment of the present disclosure can be executed in a mobile terminal, a computer terminal or a similar computing device. Taking running on a mobile terminal as an example, FIG. 1 is a hardware structure block diagram of a mobile terminal in a random access method according to an embodiment of the present disclosure. As shown in FIG. 1, the mobile terminal 10 can include one or more (only one is shown in FIG. 1) processors 102 (the processor 102 can include but is not limited to a processing device such as a microprocessor MCU or a programmable logic device FPGA) and a memory 104 for storing data. In some embodiments, the mobile terminal can also include a transmission device 106 for communication functions and an input/output device 108. It can be understood by those skilled in the art that the structure shown in FIG. 1 is only for illustration and does not limit the structure of the mobile terminal. For example, the mobile terminal 10 can also include more or fewer components than those shown in FIG. 1, or have a configuration different from that shown in FIG. 1.

The memory 104 can store computer programs, for example, software programs and modules of application software, such as the computer program corresponding to the random access method in the embodiment of the present disclosure. The processor 102 executes various functional applications and data processing by running the computer program stored in the memory 104, that is, to implement the above method. The memory 104 can include a high-speed random access memory, and can also include a non-volatile memory, such as one or more magnetic storage devices, flash memory, or other non-volatile solid-state memory. In some instances, the memory 104 can further include a memory remotely arranged relative to the processor 102, and these remote memories can be connected to the mobile terminal 10 via a network. Examples of the above-mentioned network include, but are not limited to, the Internet, an intranet, a local area network, a mobile communication network, and combinations thereof.

The transmission device 106 is configured to receive or send data via a network. The above network example can include a wireless network provided by a communication provider of the mobile terminal 10. In one example, the transmission device 106 includes a network adapter (Network Interface Controller, NIC), which can be connected to other network devices through a base station so as to communicate with the Internet. In one example, the transmission device 106 can be a radio frequency (RF) module, which communicates with the Internet wirelessly.

In some cases, the random access scheme of the 3rd Generation Partnership Project (3GPP) is that the network device sends MSG2 through PDSCH, and the network device sends DCI through PDCCH to notify the terminal device of the scheduling information of MSG2, that is, the location information of MSG2 in PDSCH. The terminal device obtains DCI from PDCCH, decodes DCI, obtains the scheduling information of MSG2, and obtains MSG2 from PDSCH according to the scheduling information of MSG2. However, the transmission of MSG2 through PDCCH scheduling PDSCH significantly increases the access delay.

Research has found that MSG2 can be directly transmitted through PDCCH to solve the problem of extended random access time.

The random access method provided in the present disclosure is implemented by the cooperation of the terminal device and the network device. The following explains the random access method provided in the present disclosure from the two perspectives of the terminal device and the network device.

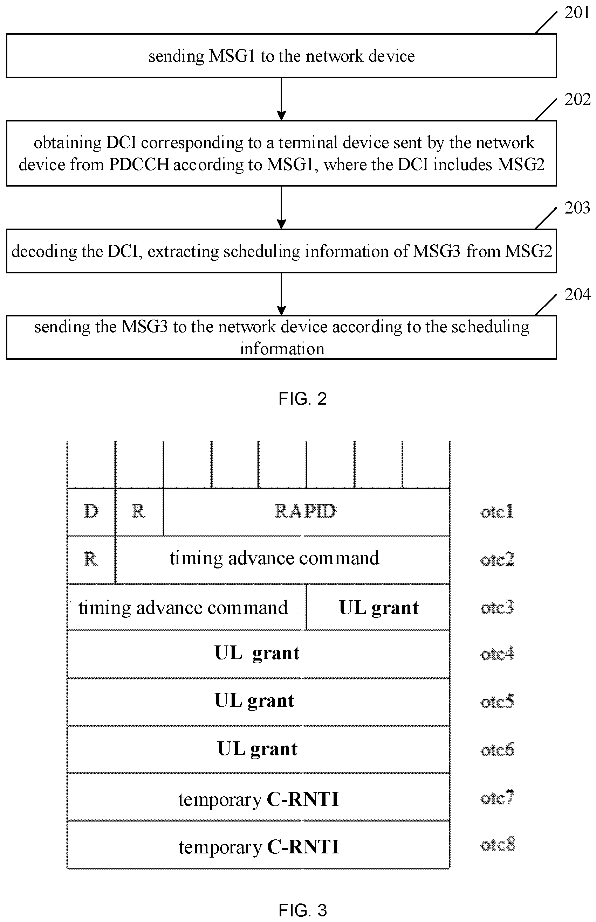

In this embodiment, a random access method is provided, which is applied to a terminal device. FIG. 2 is a flowchart of a random access method applied to a terminal device according to an embodiment of the present disclosure. As shown in FIG. 2, the process includes the following steps 201 to 204.

Step 201, sending MSG1 to the network device.

Step 202, obtaining DCI corresponding to a terminal device sent by the network device from PDCCH according to MSG1, where the DCI includes MSG2.

Step 203, decoding the DCI, extracting scheduling information of MSG3 from MSG2.

Step 204, sending the MSG3 to the network device according to the scheduling information.

Through steps 201 to 204, the present disclosure does not need to schedule PDSCH through PDCCH, and then obtain MSG2 from the specified position in PDSCH, and directly transmits MSG2 through PDCCH, thereby reducing the delay of random access.

In some exemplary embodiments, DCI includes MSG2 and Random Access Preamble Identifier (RAPID).

The step 202 includes: obtaining a random access preamble code in MSG1; obtaining the RAPID in the DCI sent by the network device from the PDCCH; and when the random access preamble code and the RAPID are consistent, determining that the DCI sent by the network device is downlink control information corresponding to the terminal device.

For example, the random access preamble code included in MSG1 sent by terminal device A is 1am3bodf, and the RAPID in the DCI sent by the network device is also 1am3bodf. The random access preamble code and RAPID are consistent, both are 1am3bodf, then the DCI sent by the network device is the downlink control information corresponding to terminal device A.

RAPID is configured to identify the terminal device. The number of bits occupied by RAPID in DCI may be 6 bits.

In some exemplary embodiments, MSG2 includes scheduling information of MSG3, and the scheduling information of MSG3 includes a timing advance command, an uplink grant (UL Grant), and a temporary cell-radio network temporary identifier (Temporary C-RNTI).

The step 204 includes: scrambling MSG3 by the Temporary C-RNTI; and sending the scrambled MSG3 to the network device by using a resource configuration indicated by the UL Grant at a sending time indicated by the timing advance command.

The timing advance command is configured to control the sending time of MSG3. The number of bits occupied by the timing advance command in the DCI may be 12 bits. The UL Grant is configured to indicate the resource configuration for sending MSG3. The number of bits occupied by the UL Grant in the DCI may be 27 bits. The Temporary C-RNTI is configured to scramble MSG3. The number of bits occupied by the Temporary C-RNTI in the DCI may be 16 bits.

In some exemplary embodiments, as shown in FIG. 3, a schematic diagram of the DCI format 0_3 is shown. The DCI format 0_3 includes the following fields: (1) Downlink control information type indicator D, configured to indicate the DCI type, with a fixed value of 0, indicating that it is an uplink DCI, and the number of bits occupied is 1 bit. (2) R, reserved space, with a fixed value of 0, and the number of bits occupied is 1 bit. (3) RAPID, configured to identify the terminal device, and the number of bits occupied is 6 bits. (4) Timing Advance Command, configured to control the sending time of MSG3, and the number of bits occupied is 12 bits. (5) UL Grant, configured to indicate the resource configuration for sending MSG3, and the number of bits occupied is 27 bits. (6) Temporary C-RNTI, configured to scramble MSG3, and the number of bits occupied is 16 bits.

In some exemplary embodiments, obtaining the RAPID in the DCI sent by the network device from the PDCCH includes: obtaining a random access radio network temporary identifier (RA_RNTI); descrambling the DCI sent by the network device from the PDCCH through the RA_RNTI to obtain the descrambled DCI; and extracting the RAPID from the descrambled DCI.

On the network device side, the role of RA_RNTI is to scramble the DCI. On the terminal device side, the DCI sent by the network device is descrambled through RA_RNTI to obtain the descrambled DCI.

In some exemplary embodiments, after the step 202 and before the step 203, the random access method applied to the terminal device also includes: obtaining the number of bits of the DCI; and when the number of bits is different from the preset number of bits, determining that the DCI includes MSG2.

The preset number of bits refers to the number of bits of the DCI that does not include MSG2.

Since the number of bits of the downlink control information DCI format 0_3 in the present disclosure is different from the number of bits of the downlink control information not including MSG2, when the number of bits of the DCI is different from the preset number of bits, it is determined that the DCI is format 0_3, and format 0_3 includes MSG2. When it is determined that the DCI includes MSG2, the DCI is decoded according to the encoding method of the DCI in the present disclosure, and the scheduling information of MSG3 is extracted from MSG2.

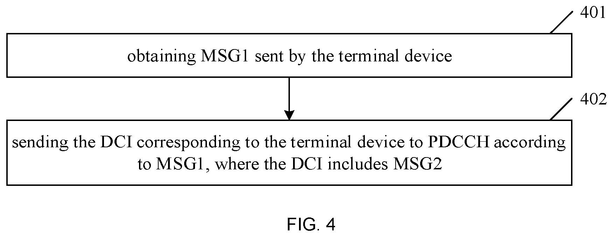

In this embodiment, a random access method is provided, which is applied to a network device. FIG4 is a flowchart of a random access method applied to a network device according to an embodiment of the present disclosure. As shown in FIG. 4, the flow includes the following steps 401 to 402.

Step 401, obtaining MSG1 sent by the terminal device.

Step 402, sending the DCI corresponding to the terminal device to PDCCH according to MSG1, where the DCI includes MSG2.

Through steps 401 to 402, the network device in the present disclosure does not need to use PDCCH to send DCI to notify the terminal device of the location information of MSG2 in PDSCH, thereby enabling the terminal device to obtain MSG2 from the specified position in PDSCH and directly transmit MSG2 through PDCCH, thereby reducing the delay of random access.

The network device encodes the scheduling information of MSG3 by using a preset coding rule to obtain DCI, and the terminal device decodes the DCI by using a preset decoding rule corresponding to the preset coding rule to obtain the scheduling information of MSG3.

In some exemplary embodiments, after the step 401 and before the step 402, the random access method applied to the network device also includes: obtaining a current occupancy parameter of PDCCH; determining that the current occupancy parameter is less than a threshold.

The threshold can be an empirical value or a value obtained from multiple tests. For example, the threshold is 80%. The current occupancy parameter of PDCCH is less than the threshold, indicating that the resources of PDCCH are sufficient and can be encoded using the preset encoding method in the present disclosure to obtain DCI, which includes MSG2.

The random access method provided in this embodiment can be applied in a dedicated network, and in business scenarios requiring a small random access delay of terminal devices, such as industrial terminal devices or Internet of Vehicles, etc. The dedicated network refers to a network with only one type of terminal devices, for example, all the dedicated network devices are industrial terminal devices. The random access method can also be applied in a hybrid network where dedicated terminal devices and existing network terminal devices coexist, which reasonably utilizes PDCCH resources to improve the speed of random access and reduce the construction cost of the dedicated network, for example, the hybrid network includes industrial terminal devices and ordinary terminal devices.

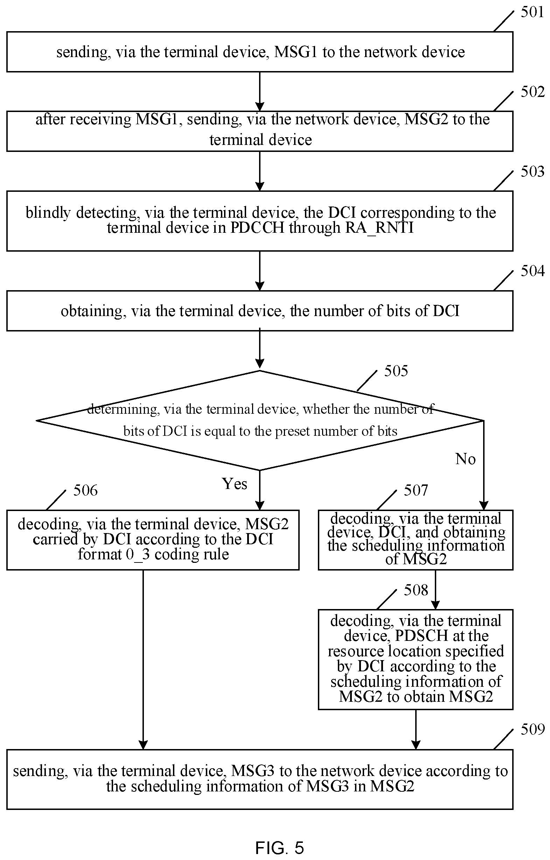

In some exemplary embodiments, a random access method is provided, which is applied to a dedicated network. FIG. 5 is a flowchart of a random access method applied to a dedicated network according to an exemplary embodiment of the present disclosure. As shown in FIG. 5, the process includes the following steps 501 to 509.

Step 501, sending, via the terminal device, MSG1 to the network device.

Step 502, after receiving MSG1, sending, via the network device, MSG2 to the terminal device.

Step 503, blindly detecting, via the terminal device, the DCI corresponding to the terminal device in PDCCH through RA_RNTI.

Step 504, obtaining, via the terminal device, the number of bits of DCI.

Step 505, determining, via the terminal device, whether the number of bits of DCI is equal to the preset number of bits. If so, execute step 506, otherwise execute step 507.

Step 506, decoding, via the terminal device, MSG2 carried by DCI according to the DCI format 0_3 coding rule.

Step 507, decoding, via the terminal device, DCI, and obtaining the scheduling information of MSG2.

Step 508, decoding, via the terminal device, PDSCH at the resource location specified by DCI according to the scheduling information of MSG2 to obtain MSG2.

Step 509, sending, via the terminal device, MSG3 to the network device according to the scheduling information of MSG3 in MSG2.

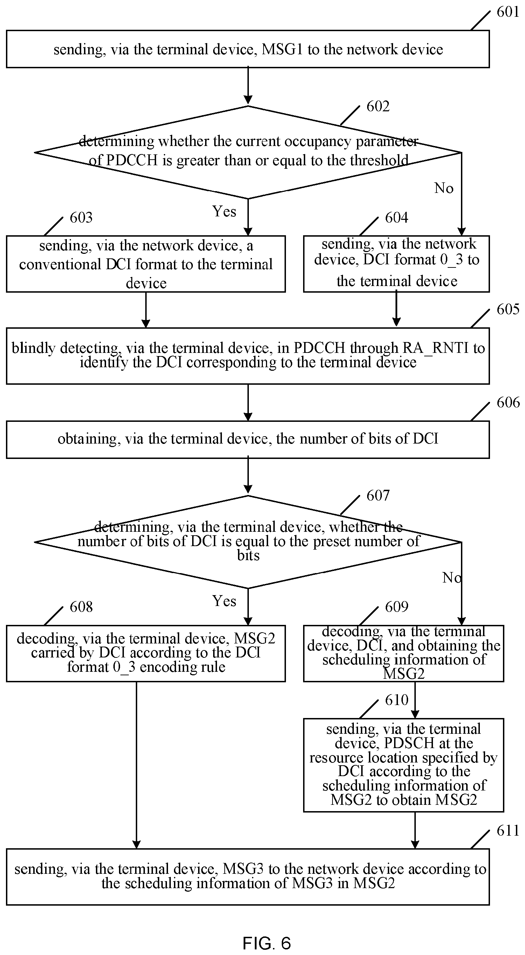

In some exemplary embodiments, a random access method is provided, which is applied to a hybrid network. The hybrid network refers to a network in which dedicated terminal devices and existing network terminal devices coexist. FIG. 6 is a flowchart of a random access method applied to a hybrid network according to an exemplary embodiment of the present disclosure. As shown in FIG. 6, the process includes the following steps 601 to 611.

Step 601, sending, via the terminal device, MSG1 to the network device.

Step 602, after receiving MSG1, determining, via the terminal device, whether the current occupancy parameter of PDCCH is greater than or equal to the threshold. If so, execute step 603, otherwise, execute step 604.

Step 603, sending, via the network device, a conventional DCI format to the terminal device.

Step 604, sending, via the network device, DCI format 0_3 to the terminal device.

Step 605, blindly detecting, via the terminal device, in PDCCH through RA_RNTI to identify the DCI corresponding to the terminal device.

Step 606, obtaining, via the terminal device, the number of bits of DCI.

Step 607, determining, via the terminal device, whether the number of bits of DCI is equal to the preset number of bits. If so, execute step 608, otherwise execute step 609.

Step 608, decoding, via the terminal device, MSG2 carried by DCI according to the DCI format 0_3 encoding rule.

Step 609, decoding, via the terminal device, DCI, and obtaining the scheduling information of MSG2.

Step 610, sending, via the terminal device, PDSCH at the resource location specified by DCI according to the scheduling information of MSG2 to obtain MSG2.

Step 611, sending, via the terminal device, MSG3 to the network device according to the scheduling information of MSG3 in MSG2.

Through the description of the above implementation methods, those skilled in the art can clearly understand that the method according to the above embodiment can be implemented by means of software plus a necessary general hardware platform, or by hardware, but in many cases the former is a better implementation method. Based on this understanding, the technical solution of the present disclosure, or the part that contributes to the related art, can be embodied in the form of a software product. The computer software product is stored in a storage medium (such as ROM/RAM, disk, optical disk), including several instructions for a terminal device (which can be a mobile phone, a computer, a server, or network device, etc.) to execute the methods described in each embodiment of the present disclosure.

### Embodiment 2

In this embodiment, a random access apparatus is also provided, which is configured in a terminal device, and the apparatus is configured to implement the above-mentioned embodiments and implementation methods, and the descriptions have been made and will not be repeated. As used below, the term "module" can implement a combination of software and/or hardware for a predetermined function. Although the apparatus described in the following embodiments is preferably implemented in software, the implementation of hardware, or a combination of software and hardware, is also possible and conceivable.

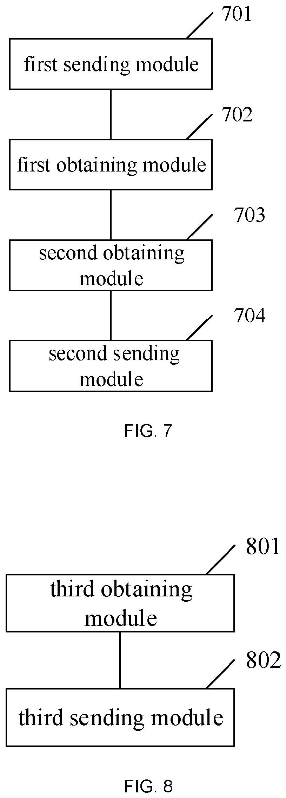

FIG. 7 is a structural block diagram of a random access apparatus configured in a terminal device according to an embodiment of the present disclosure. As shown in FIG. 7, the apparatus includes a first sending module 701, a first obtaining module 702, a second obtaining module 703 and a second sending module 704.

The first sending module 701 is configured to send a random access request to a network device.

The first obtaining module 702 is configured to obtain downlink control information corresponding to the terminal device sent by the network device from a physical downlink control channel according to the random access request, where the downlink control information includes a random access response.

The second obtaining module 703 is configured to decode the downlink control information, and extract scheduling information of a random access instruction from the random access response.

The second sending module 704 is configured to send the random access instruction to the network device according to the scheduling information.

It should be noted that the above modules can be implemented by software or hardware. For the latter, it can be implemented in the following ways, but not limited to: the above modules are all located in the same processor; or the above modules are located in different processors in any combination.

FIG. 8 is a structural block diagram of a random access apparatus configured in a network device according to an embodiment of the present disclosure. As shown in FIG. 8, the apparatus includes a third obtaining module 801 and a third sending module 802.

The third obtaining module 801 is configured to obtain a random access request sent by a terminal device.

The third sending module 802 is configured to send downlink control information corresponding to the terminal device to a physical downlink control channel according to the random access request, where the downlink control information includes a random access response.

It should be noted that the above modules can be implemented by software or hardware. For the latter, it can be implemented in the following ways, but not limited to: the above modules are all located in the same processor; or the above modules are located in different processors in any combination.

### Embodiment 3

An embodiment of the present disclosure further provides a storage medium, a computer program is stored in the storage medium, and the computer program is configured to execute the steps of any of the above method embodiments when running.

In some embodiments, the above storage medium may include but is not limited to: a USB flash drive, a read-only memory (ROM), a random access memory (RAM), a mobile hard disk, a magnetic disk or an optical disk, and other medium that can store the computer program.

### Embodiment 4

An embodiment of the present disclosure also provides an electronic device, including a memory and a processor. The memory stores a computer program, and the processor is configured to run the computer program to execute the steps in any of the above method embodiments. The memory 104 in FIG. 1 is used as an example of a memory in the electronic device.

In some embodiments, the electronic device may further include a transmission device and an input/output device, the transmission device is connected to the processor, and the input/output device is connected to the processor.

Obviously, those skilled in the art should understand that the above modules or steps of the present disclosure can be implemented by a general computing device, they can be concentrated on a single computing device, or distributed on a network composed of multiple computing devices. In some embodiments, they can be implemented by program codes executable by the computing device, so that they can be stored in a storage device and executed by the computing device. In some cases, the steps shown or described can be executed in a different order than here, or they can be made into individual integrated circuit modules, or multiple modules or steps in them can be made into a single integrated circuit module for implementation. In this way, the present disclosure is not limited to any specific combination of hardware and software.

Through the present disclosure, the terminal device sends a random access request to the network device, and obtains the downlink control information (DCI) corresponding to the terminal device sent by the network device from the physical downlink control channel according to the random access request. DCI includes a random access response. The terminal device directly decodes DCI, extracts the scheduling information of the random access command (message 3, MSG3) from the random access response, and sends MSG3 to the network device according to the scheduling information to complete the random access process. The present disclosure does not need to schedule a physical downlink shared channel through a physical downlink control channel, and then obtain a random access response from a specified position in the physical downlink shared channel, and directly transmits the random access response through the physical downlink control channel, thereby reducing the delay of random access.

## Claims

1. A random access method for a terminal device, comprising:
(201), sending a random access request to a network device;
(202), obtaining downlink control information corresponding to the terminal device sent by the network device from a physical downlink control channel, PDCCH, according to the random access request, wherein the downlink control information comprises a random access response;
(203), decoding the downlink control information, extracting scheduling information of a random access instruction from the random access response; and
(204), sending the random access instruction to the network device according to the scheduling information;
wherein the random access response comprises the scheduling information, and the scheduling information comprises a timing advance command, an uplink grant, and a temporary cell-radio network temporary identifier, Temporary C-RNTI;
the (204), sending the random access instruction to the network device according to the scheduling information comprising:
scrambling the random access instruction via the Temporary C-RNTI; and
sending the scrambled random access instruction to the network device through a resource configuration indicated by the uplink grant at a sending time indicated by the timing advance command.

2. The random access method according to claim 1, wherein the downlink control information also comprises a random access preamble identifier, RAPID;
the obtaining the downlink control information corresponding to the terminal device sent by the network device from the PDCCH according to the random access request comprises:
obtaining a random access preamble code comprised in the random access request;
obtaining the RAPID in the downlink control information sent by the network device from the PDCCH; and
in response to that the random access preamble code and the RAPID are consistent, determining the downlink control information sent by the network device being the downlink control information corresponding to the terminal device.

3. The random access method according to claim 2, wherein the obtaining the RAPID in the downlink control information sent by the network device from the PDCCH comprises:
obtaining a random access wireless network temporary identifier;
descrambling the downlink control information sent by the network device from the PDCCH through the random access wireless network temporary identifier to obtain the descrambled downlink control information; and
extracting the RAPID from the descrambled downlink control information.

4. The random access method according to any one of claims 1 to 3, wherein before the decoding the downlink control information, extracting the scheduling information of the random access instruction from the random access response, the random access method further comprises:
obtaining number of bits of the downlink control information; and
determining the downlink control information comprising the random access response in response to that the number of bits is different from a preset number of bits.

5. A random access method for a network device comprising:
(401), obtaining a random access request sent by a terminal device; and
(402), sending downlink control information corresponding to the terminal device to a physical downlink control channel, PDCCH, according to the random access request, wherein the downlink control information comprises a random access response, wherein the random access response comprises scheduling information, and the scheduling information comprises a timing advance command, an uplink grant, and a temporary cell-radio network temporary identifier, Temporary C-RNTI; and
receiving a random access instruction from the terminal device, wherein the random access instruction is scrambled by the terminal device via the Temporary C-RNTI and sent by the terminal device through a resource configuration indicated by the uplink grant at a sending time indicated by the timing advance command.

6. The random access method according to claim 5, wherein before the obtaining the random access request sent by the terminal device, and sending the downlink control information corresponding to the terminal device to the PDCCH according to the random access request, the random access method further comprises:
obtaining a current occupancy parameter of the PDCCH; and
determining that the current occupancy parameter is less than a threshold.

7. A random access apparatus for a terminal device, comprising:
a first sending module (701) configured to send a random access request to a network device;
a first obtaining module (702) configured to obtain downlink control information corresponding to the terminal device sent by the network device from a physical downlink control channel, PDCCH, according to the random access request, wherein the downlink control information comprises a random access response;
a second obtaining module (703) configured to decode the downlink control information, and extract scheduling information of a random access instruction from the random access response; and
a second sending module (704) configured to send the random access instruction to the network device according to the scheduling information;
wherein the random access response comprises the scheduling information, and the scheduling information comprises a timing advance command, an uplink grant, and a temporary cell-radio network temporary identifier, Temporary C-RNTI; the second sending module (704) is further configured to scramble the random access instruction via the Temporary C-RNTI; and send the scrambled random access instruction to the network device through a resource configuration indicated by the uplink grant at a sending time indicated by the timing advance command.

8. A random access apparatus for a network device comprising:
a third obtaining module (801) configured to obtain a random access request sent by a terminal device; and
a third sending module (802) configured to send downlink control information corresponding to the terminal device to a physical downlink control channel, PDCCH, according to the random access request, wherein the downlink control information comprises a random access response, wherein the random access response comprises scheduling information, and the scheduling information comprises a timing advance command, an uplink grant, and a temporary cell-radio network temporary identifier,
Temporary C-RNTI; and
the random access apparatus is configured to receive a random access instruction from the terminal device, wherein the random access instruction is scrambled by the terminal device via the Temporary C-RNTI and sent by the terminal device through a resource configuration indicated by the uplink grant at a sending time indicated by the timing advance command.

9. A storage medium storing a computer program, the computer program is configured to execute the method according to any one of claims 1 to 4, or the method according to any one of claims 5 to 6 when running.

## Patentansprüche

1. Ein Zufallszugriffsverfahren für ein Endgerät, umfassend:
(201) Senden einer Zufallszugriffsanforderung an eine Netzwerkvorrichtung;
(202) Empfangen von Downlink-Steuerinformationen, die der Netzwerkvorrichtung entsprechend dem Endgerät über einen physischen Downlink-Steuerkanal (PDCCH) gesendet werden, basierend auf der Zufallszugriffsanforderung, wobei die Downlink-Steuerinformationen eine Zufallszugriffsantwort umfassen;
(203) Dekodieren der Downlink-Steuerinformationen und Extrahieren von Planungsinformationen einer Zufallszugriffsanweisung aus der Zufallszugriffsantwort; und
(204) Senden der Zufallszugriffsanweisung an die Netzwerkvorrichtung gemäß den Planungsinformationen;
wobei die Zufallszugriffsantwort die Planungsinformationen umfasst, und die Planungsinformationen einen Timing-Advance-Befehl, eine Uplink-Zuweisung und eine temporäre Zell-Funknetzwerk-Temporärkennung (Temporary C-RNTI) umfassen;
das (204) Senden der Zufallszugriffsanweisung an die Netzwerkvorrichtung gemäß den Planungsinformationen umfasst:
Scrambling der Zufallszugriffsanweisung mittels der Temporary C-RNTI; und
Senden der gescrambleten Zufallszugriffsanweisung an die Netzwerkvorrichtung über eine durch die Uplink-Zuweisung angegebene Ressourcen-Konfiguration zu einem vom Timing-Advance-Befehl angegebenen Sendezeitpunkt.

2. Das Zufallszugriffsverfahren nach Anspruch 1, wobei die Downlink-Steuerinformationen außerdem eine Zufallszugriffs-Präambelkennung (RAPID) umfassen;
das Empfangen der Downlink-Steuerinformationen, die der Netzwerkvorrichtung entsprechend dem Endgerät über den PDCCH gesendet werden, umfasst:
Empfangen eines in der Zufallszugriffsanforderung enthaltenen Zufallszugriffs-Präambel-Codes;
Empfangen der RAPID in den vom Netzwerkgerät über den PDCCH gesendeten Downlink-Steuerinformationen; und
Feststellen, dass die Downlink-Steuerinformationen, die der Netzwerkvorrichtung gesendet werden, den Downlink-Steuerinformationen entsprechen, die dem Endgerät zugeordnet sind, falls der Zufallszugriffs-Präambel-Code und die RAPID übereinstimmen.

3. Das Zufallszugriffsverfahren nach Anspruch 2, wobei das Empfangen der RAPID in den vom Netzwerkgerät über den PDCCH gesendeten Downlink-Steuerinformationen umfasst:
Empfangen einer Zufallszugriffs-Funknetzwerk-Temporärkennung;
Descrambling der vom Netzwerkgerät über den PDCCH gesendeten Downlink-Steuerinformationen mittels der Zufallszugriffs-Funknetzwerk-Temporärkennung, um die descrambleten Downlink-Steuerinformationen zu erhalten; und
Extrahieren der RAPID aus den descrambleten Downlink-Steuerinformationen.

4. Das Zufallszugriffsverfahren nach einem der Ansprüche 1 bis 3, wobei vor dem Dekodieren der Downlink-Steuerinformationen und dem Extrahieren der Planungsinformationen der Zufallszugriffsanweisung aus der Zufallszugriffsantwort das Verfahren ferner umfasst:
Bestimmen der Anzahl der Bits der Downlink-Steuerinformationen; und
Feststellen, dass die Downlink-Steuerinformationen die Zufallszugriffsantwort enthalten, falls die Anzahl der Bits von einer voreingestellten Bitanzahl abweicht.

5. Ein Zufallszugriffsverfahren für eine Netzwerkvorrichtung, umfassend:
(401) Empfangen einer vom Endgerät gesendeten Zufallszugriffsanforderung; und
(402) Senden von Downlink-Steuerinformationen, die dem Endgerät entsprechen, über einen physischen Downlink-Steuerkanal (PDCCH) gemäß der Zufallszugriffsanforderung, wobei die Downlink-Steuerinformationen eine Zufallszugriffsantwort umfassen, und die Zufallszugriffsantwort Planungsinformationen enthält, wobei die Planungsinformationen einen Timing-Advance-Befehl, eine Uplink-Zuweisung und eine Temporary C-RNTI umfassen; und Empfangen einer Zufallszugriffsanweisung vom Endgerät, wobei die Zufallszugriffsanweisung vom Endgerät mittels Temporary C-RNTI gescrambelt und über eine durch die Uplink-Zuweisung angegebene Ressourcen-Konfiguration zu einem vom Timing-Advance-Befehl angegebenen Sendezeitpunkt gesendet wird.

6. Das Zufallszugriffsverfahren nach Anspruch 5, wobei vor dem Empfangen der vom Endgerät gesendeten Zufallszugriffsanforderung und dem Senden der Downlink-Steuerinformationen an den PDCCH gemäß der Zufallszugriffsanforderung das Verfahren ferner umfasst:
Empfangen eines aktuellen Belegungsparameters des PDCCH; und
Feststellen, dass der aktuelle Belegungsparameter kleiner als ein Schwellenwert ist.

7. Eine Zufallszugriffs-Vorrichtung für ein Endgerät, umfassend:
ein erstes Sendemodul (701), das konfiguriert ist, eine Zufallszugriffsanforderung an eine Netzwerkvorrichtung zu senden;
ein erstes Empfangsmodul (702), das konfiguriert ist, Downlink-Steuerinformationen, die der Netzwerkvorrichtung gemäß dem Endgerät über den PDCCH gesendet werden, zu empfangen, wobei die Downlink-Steuerinformationen eine Zufallszugriffsantwort umfassen;
ein zweites Empfangsmodul (703), das konfiguriert ist, die Downlink-Steuerinformationen zu dekodieren und Planungsinformationen einer Zufallszugriffsanweisung aus der Zufallszugriffsantwort zu extrahieren; und
ein zweites Sendemodul (704), das konfiguriert ist, die Zufallszugriffsanweisung gemäß den Planungsinformationen an die Netzwerkvorrichtung zu senden;
wobei die Zufallszugriffsantwort die Planungsinformationen umfasst, und die Planungsinformationen einen Timing-Advance-Befehl, eine Uplink-Zuweisung und eine Temporary C-RNTI umfassen; das zweite Sendemodul (704) ist ferner konfiguriert, die Zufallszugriffsanweisung mittels Temporary C-RNTI zu scramblen und die gescramblete Zufallszugriffsanweisung über eine durch die Uplink-Zuweisung angegebene Ressourcen-Konfiguration zu einem vom Timing-Advance-Befehl angegebenen Sendezeitpunkt zu senden.

8. Eine Zufallszugriffs-Vorrichtung für eine Netzwerkvorrichtung, umfassend:
ein drittes Empfangsmodul (801), das konfiguriert ist, eine vom Endgerät gesendete Zufallszugriffsanforderung zu empfangen; und
ein drittes Sendemodul (802), das konfiguriert ist, Downlink-Steuerinformationen, die dem Endgerät entsprechen, über einen PDCCH gemäß der Zufallszugriffsanforderung zu senden, wobei die Downlink-Steuerinformationen eine Zufallszugriffsantwort umfassen, die Planungsinformationen enthält, und die Planungsinformationen einen Timing-Advance-Befehl, eine Uplink-Zuweisung und eine Temporary C-RNTI umfassen;
die Zufallszugriffs-Vorrichtung ist konfiguriert, eine Zufallszugriffsanweisung vom Endgerät zu empfangen, wobei die Zufallszugriffsanweisung vom Endgerät mittels Temporary C-RNTI gescrambelt und über eine durch die Uplink-Zuweisung angegebene Ressourcen-Konfiguration zu einem vom Timing-Advance-Befehl angegebenen Sendezeitpunkt gesendet wird.

9. Ein Speicherträger, der ein Computerprogramm speichert, wobei das Computerprogramm konfiguriert ist, das Verfahren nach einem der Ansprüche 1 bis 4 oder das Verfahren nach einem der Ansprüche 5 bis 6 auszuführen, wenn es ausgeführt wird.

## Revendications

1. Une méthode d'accès aléatoire pour un dispositif terminal, comprenant: (201) l'envoi d'une requête d'accès aléatoire à un dispositif réseau; (202) l'obtention d'informations de contrôle en liaison descendante correspondant au dispositif terminal envoyées par le dispositif réseau depuis un canal de contrôle physique en liaison descendante (PDCCH) selon la requête d'accès aléatoire, les informations de contrôle en liaison descendante comprenant une réponse d'accès aléatoire; (203) le décodage des informations de contrôle en liaison descendante et l'extraction des informations de planification d'une instruction d'accès aléatoire à partir de la réponse d'accès aléatoire; et (204) l'envoi de l'instruction d'accès aléatoire au dispositif réseau selon les informations de planification; où la réponse d'accès aléatoire comprend les informations de planification, et les informations de planification comprennent une commande d'avance de synchronisation, une allocation de liaison montante et un identifiant temporaire de réseau cellulaire-radio (Temporary C-RNTI) ; le (204) envoi de l'instruction d'accès aléatoire au dispositif réseau selon les informations de planification comprenant :
le brouillage de l'instruction d'accès aléatoire via le Temporary C-RNTI ; et
l'envoi de l'instruction d'accès aléatoire brouillée au dispositif réseau via une configuration de ressources indiquée par l'allocation de liaison montante à un moment d'envoi indiqué par la commande d'avance de synchronisation.

2. La méthode d'accès aléatoire selon la revendication 1, où les informations de contrôle en liaison descendante comprennent également un identifiant de préambule d'accès aléatoire (RAPID); l'obtention des informations de contrôle en liaison descendante correspondant au dispositif terminal envoyé par le dispositif réseau depuis le PDCCH selon la requête d'accès aléatoire comprend:
l'obtention d'un code de préambule d'accès aléatoire inclus dans la requête d'accès aléatoire ;
l'obtention du RAPID dans les informations de contrôle en liaison descendante envoyées par le dispositif réseau depuis le PDCCH; et
en réponse à la correspondance du code de préambule d'accès aléatoire et du RAPID, déterminer que les informations de contrôle en liaison descendante envoyées par le dispositif réseau correspondent aux informations de contrôle en liaison descendante du dispositif terminal.

3. La méthode d'accès aléatoire selon la revendication 2, où l'obtention du RAPID dans les informations de contrôle en liaison descendante envoyées par le dispositif réseau depuis le PDCCH comprend:
l'obtention d'un identifiant temporaire de réseau sans fil d'accès aléatoire ;
le décodage inverse (descrambling) des informations de contrôle en liaison descendante envoyées par le dispositif réseau depuis le PDCCH via l'identifiant temporaire de réseau sans fil d'accès aléatoire afin d'obtenir les informations de contrôle en liaison descendante décodées ; et
l'extraction du RAPID à partir des informations de contrôle en liaison descendante décodées.

4. La méthode d'accès aléatoire selon l'une quelconque des revendications 1 à 3,
où avant le décodage des informations de contrôle en liaison descendante et l'extraction des informations de planification de l'instruction d'accès aléatoire à partir de la réponse d'accès aléatoire, la méthode comprend en outre:
l'obtention du nombre de bits des informations de contrôle en liaison descendante; et
déterminer que les informations de contrôle en liaison descendante comprennent la réponse d'accès aléatoire si le nombre de bits diffère d'un nombre de bits prédéfini.

5. Une méthode d'accès aléatoire pour un dispositif réseau, comprenant: (401) l'obtention d'une requête d'accès aléatoire envoyée par un dispositif terminal; et (402) l'envoi d'informations de contrôle en liaison descendante correspondant au dispositif terminal à un canal de contrôle physique en liaison descendante (PDCCH) selon la requête d'accès aléatoire, les informations de contrôle en liaison descendante comprenant une réponse d'accès aléatoire, la réponse d'accès aléatoire comprenant des informations de planification, et les informations de planification comprenant une commande d'avance de synchronisation, une allocation de liaison montante et un Temporary C-RNTI ; et la réception d'une instruction d'accès aléatoire du dispositif terminal, l'instruction étant brouillée par le dispositif terminal via le Temporary C-RNTI et envoyée par le dispositif terminal via une configuration de ressources indiquée par l'allocation de liaison montante à un moment d'envoi indiqué par la commande d'avance de synchronisation.

6. La méthode d'accès aléatoire selon la revendication 5, où avant l'obtention de la requête d'accès aléatoire envoyée par le dispositif terminal et l'envoi des informations de contrôle en liaison descendante correspondant au dispositif terminal au PDCCH selon la requête d'accès aléatoire, la méthode comprend en outre :
l'obtention d'un paramètre d'occupation actuel du PDCCH; et
la détermination que le paramètre d'occupation actuel est inférieur à un seuil.

7. Un dispositif d'accès aléatoire pour un dispositif terminal, comprenant :
un premier module d'envoi (701) configuré pour envoyer une requête d'accès aléatoire à un dispositif réseau ;
un premier module d'obtention (702) configuré pour obtenir les informations de contrôle en liaison descendante correspondant au dispositif terminal envoyées par le dispositif réseau depuis le PDCCH selon la requête d'accès aléatoire, les informations de contrôle en liaison descendante comprenant une réponse d'accès aléatoire;
un second module d'obtention (703) configuré pour décoder les informations de contrôle en liaison descendante et extraire les informations de planification d'une instruction d'accès aléatoire à partir de la réponse d'accès aléatoire ; et
un second module d'envoi (704) configuré pour envoyer l'instruction d'accès aléatoire au dispositif réseau selon les informations de planification ; où la réponse d'accès aléatoire comprend les informations de planification, et les informations de planification comprennent une commande d'avance de synchronisation, une allocation de liaison montante et un Temporary C-RNTI ;
le second module d'envoi (704) est en outre configuré pour brouiller l'instruction d'accès aléatoire via le Temporary C-RNTI et envoyer l'instruction d'accès aléatoire brouillée via une configuration de ressources indiquée par l'allocation de liaison montante à un moment d'envoi indiqué par la commande d'avance de synchronisation.

8. Un dispositif d'accès aléatoire pour un dispositif réseau, comprenant:
un troisième module d'obtention (801) configuré pour obtenir une requête d'accès aléatoire envoyée par un dispositif terminal; et
un troisième module d'envoi (802) configuré pour envoyer des informations de contrôle en liaison descendante correspondant au dispositif terminal au PDCCH selon la requête d'accès aléatoire, les informations de contrôle en liaison descendante comprenant une réponse d'accès aléatoire contenant des informations de planification, et les informations de planification comprenant une commande d'avance de synchronisation, une allocation de liaison montante et un Temporary C-RNTI; le dispositif d'accès aléatoire étant configuré pour recevoir une instruction d'accès aléatoire du dispositif terminal,
l'instruction étant brouillée par le dispositif terminal via le Temporary C-RNTI et envoyée via une configuration de ressources indiquée par l'allocation de liaison montante à un moment d'envoi indiqué par la commande d'avance de synchronisation.

9. Un support de stockage stockant un programme informatique, le programme étant configuré pour exécuter la méthode selon l'une quelconque des revendications 1 à 4, ou la méthode selon l'une quelconque des revendications 5 à 6 lors de son exécution.
